# EUROPEAN PATENT APPLICATION

(11) **EP 1 690 773 A2**
(43) Date of publication of application: **16.08.2006**
(21) Application number: 06100862.9
(22) Date of filing: 25.01.2006
(51) Int. Cl.: B62B 7/08

(54) **Folding system for child pushchairs**

(30) Priority: 11.02.2005 ES 200500302
(71) Applicant: PLAY, S.A., 08184 Palau de Plegamans (ES)
(72) Inventor: Jane Stopp, Joaquim PLAY, S.A., 08184, Palau de Plegamans (ES)
(74) Representative: Ponti Sales, Adelaida

(57) **Abstract**

The folding system is characterised in that between said vertical bars (2) are placed to hinged rods (4) arranged in a X-shape, the lower ends of said rods (4) being fixed to the lower part of said vertical bars (2), and the upper ends of said rods (4) are slidable along said vertical bars (2) between a lower o use position of the pushchair and an upper o folded position of the pushchair.

It permits that the folding of the pushchair to be more comfortable, so that just the upper ends of said rods must be lifted.

## Description

The present invention refers to a folding system for child pushchairs, the structure of the pushchair being formed by a plurality of bars hinged one to each other.

### BACKGROUND OF THE INVENTION

The known child pushchairs comprise several folding systems of its structure to occupy a reduced space when they are not in use. The pushchair structure is formed by some bars hinged one to each other.

Nowadays there are two main folding systems. According to a first folding system, only the upper part of the pushchair is folded on the lower part, i.e. just the bars which form the handles are turned forwardly. This folding system is very comfortable, because the folding can be done easily, but it has the drawback that the pushchair occupies a considerable space, even when it is folded.

A second folding system also comprises the longitudinal folding of the pushchair, i.e. both laterals of the pushchair are folded inwardly. This system has the advantage that the space which occupies the pushchair is reduced, but it has the drawback that the folding is uncomfortable because of the manoeuvres that must be done.

### DESCRIPTION OF THE INVENTION

With the folding system of the invention said drawbacks are solved, presenting another advantages that will be described.

The folding system of child pushchair of the present invention is applied to a child pushchair comprising a structure which comprises a plurality of bars hinged one to each other, a pair of said bars being vertical, and in whose lower part are placed the rear wheels of the pushchair, and it is characterised in that between said vertical bars are placed to hinged rods arranged in a X-shape, the lower ends of said rods being fixed to the lower part of said vertical bars, and the upper ends of said rods are slidable along said vertical bars between a lower o use position of the pushchair and an upper o folded position of the pushchair.

Thanks to this feature, the folding of the pushchair to be more comfortable, so that just the upper ends of said rods must be lifted.

Advantageously, said rods comprise a compass placed close to a the intersection of said rods, said compass comprising a protrusion in its central part, so that the said protrusion is lifted the pushchair folds.

Therefore, the folding of the pushchair is even more comfortable, because just said protrusion must be lifted.

According to a preferred embodiment, the upper ends of said rods slide along a groove.

For security reasons and to prevent the accidental folding of the pushchair, at least one of the vertical bars comprises locking means of said rods.

According to a preferred embodiment, said locking means comprises a lever linked to elastic means provided with a protrusion in one of its ends, said protrusion locking the upper end of one of said rods, and the lever can be placed in a releasing position against said elastic means, said protrusion permitting the sliding of the upper end of said rods.

### BRIEF DESCRIPTION OF THE DRAWINGS

For a better understanding of what have been described, some drawing are enclosed in which, diagrammatically and only as a non-limitative example, an embodiment is shown.
Fig. 1 is a perspective view of a pushchair which comprises the folding system of the present invention in its use position;
Fig. 2 is a perspective view of the pushchair in an intermediate position during its folding;
Fig. 3 is a perspective view of the pushchair in its folding position;
Fig. 4 and 5 are diagrammatical lateral views of the blocking means of the folding system, in its blocking and releasing position, respectively; and
Fig. 6 is a diagrammatical perspective view of said blocking means.

### DESCRIPTION OF A PREFERRED EMBODIMENT

As can be seen from the figures, the pushchair showed, identified generally by reference numeral 1, comprises a structure formed by a plurality of bar hinged one to each other.

Two of these bars are vertical bars 2 placed at the rear part of the pushchair, and comprising at is lower part its rear wheels 3.

The folding system of the present invention comprises two rods 4 arranged in a X-shape between said vertical bars 2.

The lower ends of said rods 4 are fixed to the lower part of said bars 2, and the upper ends slide along grooves 5 provided at said bars 2.

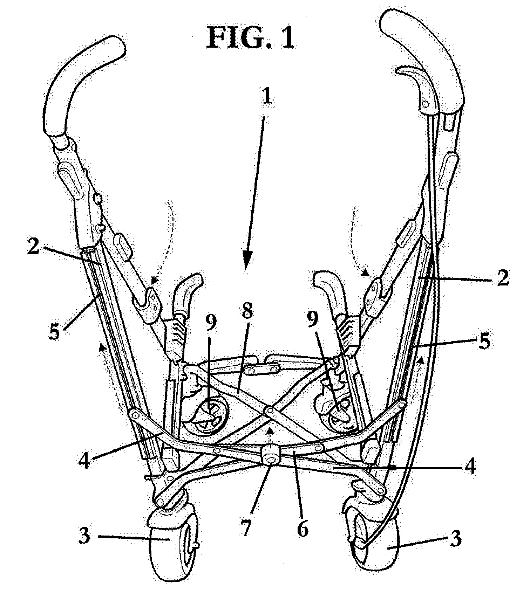

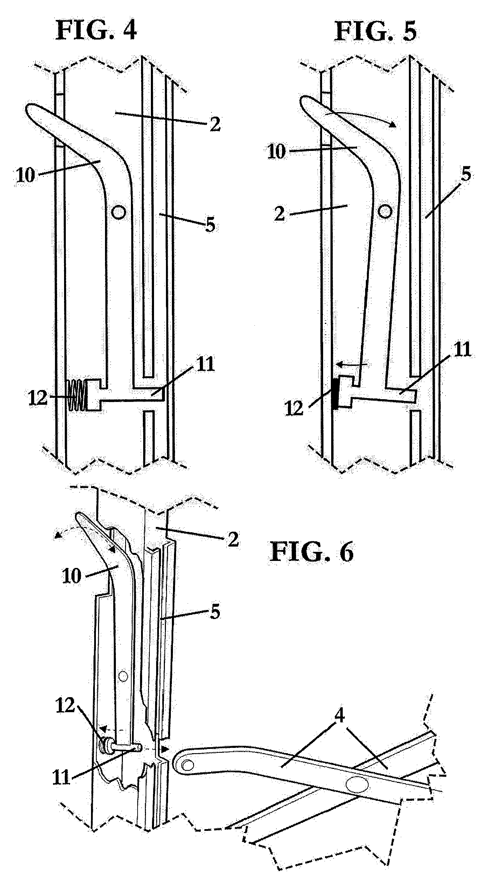

The upper ends of said rods 4 slide between a lower or use position, shown in Fig. 1, and an upper o folded position, shown in Fig. 4.

To facilitate the folding of the pushchair, said rods 4 comprise at its upper part a compass 6 provided with a protrusion 7 at its central part.

The folding system of the pushchair also comprises a pair of additional rods 8 which are also arranged in a X-shape, which are placed between the rear wheels 3 and the frontal wheels 9 of the pushchair.

As can be seen from Fig. 4-6, the pushchair also comprises locking means to prevent the accidental folding of the pushchair. Said locking means comprises at least a hinged lever 10 provided with a protrusion 11 in one of its ends.

Said lever 10 can be placed in two positions: a locking position, shown in Fig. 4, in which the protrusion locks the sliding of the upper ends of said rods 4, and a releasing position, shown in Fig. 5, against the action of the spring 12, in which the sliding of the upper ends of said rods 4 is permitted.

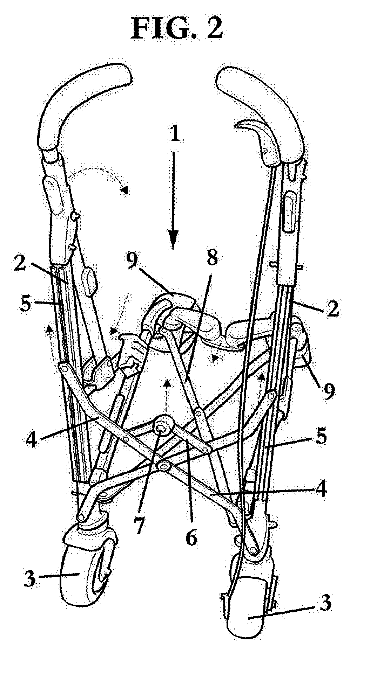

To fold the pushchair, it is necessary to drive firstly the lever(s) 10, so that the protrusion 11 is removed from the groove 5. In this position, just lifting the protrusion 7 with the foot, the upper ends of the rods 4 will slide by the grooves 5, folding the pushchair, as can be seen from Fig. 2.

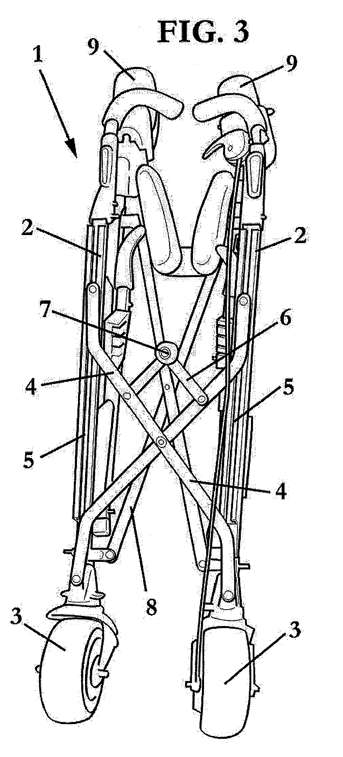

As can be seen from Fig. 3, the folded pushchair occupies a reduced space, and its folding can be done easily and comfortably, thanks to the folding system of the present invention.

From this position, to unfold the pushchair the protrusion 7 just must be lowered to its starting position.

Even though reference has been made to a particular embodiment of the invention, it is apparent for a person skilled in the art that in the described folding system can be mad variations and modifications, and that all the cited details can be substituted by other technically equivalent ones, without departing from the scope of protection defined by the attached claims.

## Claims

1. Folding system of child pushchair, the child pushchair (1) comprising a structure which comprises a plurality of bars hinged one to each other, a pair of said bars being vertical (2), and in whose lower part are placed the rear wheels (3) of the pushchair, **characterised in that** between said vertical bars (2) are placed to hinged rods (4) arranged in a X-shape, the lower ends of said rods (4) being fixed to the lower part of said vertical bars (2), and the upper ends of said rods (4) are slidable along said vertical bars (2) between a lower o use position of the pushchair and an upper o folded position of the pushchair.

2. Folding system according to claim 1, **characterised in that** said rods (4) arranged in a X-shape comprise a compass (6) placed close to a the intersection of said rods (4), said compass (6) comprising a protrusion (7) in its central part, so that the said protrusion (7) is lifted the pushchair folds.

3. Folding system according to claim 1, **characterised in that** the upper ends of said rods (4) slide along a groove (5).

4. Folding system according to any of the previous claims, **characterised in that** at least one of the vertical bars (2) comprises locking means (10, 11) of said rods (4).

5. Folding system according to claim 4, **characterised in that** said locking means comprises a lever (10) linked to elastic means (12) provided with a protrusion (11) in one of its ends, said protrusion (11) locking the upper end of one of said rods (4), and the lever (10) can be placed in a releasing position against said elastic means (12), said protrusion (11) permitting the sliding of the upper end of said rods (4).
